# EUROPEAN PATENT SPECIFICATION

(11) **EP 2 614 729 B1**
(45) Date of publication and mention of the grant of the patent: **14.03.2018**
(21) Application number: 12151243.8
(22) Date of filing: 16.01.2012
(51) Int. Cl.: A23L 3/36, A23L 3/365, A23L 3/375, A23B 4/06, A23B 4/07, A23B 7/04, A23B 7/045

(54) **A method for thawing food products**
Verfahren zum Auftauen von Nahrungsmittelprodukten
Procédé de décongélation de produits alimentaires

(43) Date of publication of application: 17.07.2013
(73) Proprietor: Coolnova UG, 49477 Ibbenbüren (DE)
(72) Inventor: Behncke, Arne, 1050 Brussels (BE)
(74) Representative: Brants, Johan P.E.

(56) References cited:
- DE-A1-102006 046 658
- GB-A- 365 530
- US-A- 4 898 741
- US-A1- 2011 111 088

## Description

### TECHNICAL FIELD

The invention pertains to the technical field of thawing food products.

### BACKGROUND

Frozen food products are normally considered to be inferior to their fresh counterparts, because the freezing/thawing process results in quality loss of the food and undesired side-effects such as for instance dehydration and drip loss. This is true for fruit and meat, and especially for fish. The process of thawing and freezing is an intricate process, which should be carefully fine-tuned, depending on the nature and characteristics of the food product. In conventional prior art freezing methods, food temperature is from room temperature to the frozen state in a matter of hours, typically 1 to 3 hours. When such conventional methods are applied to high water content foods (i.e. seafood, sushi, surimi, seafood blocks, etc.), a substantial portion of the water in the food is irreversibly lost. The loss of water is caused by an accelerated aging process that takes place when the food is exposed to a certain temperature zone for a relatively long period of time during conventional freezing processes. Exposure to this accelerated aging temperature zone for prolonged periods of time also results in the generation of ice crystals at a high rate. As a result, ice crystals that form will expand in size with time and rupture the cell structure of the food being frozen. When the food is defrosted, water generated from the ice crystals will be irreversibly lost from the food. In an attempt to address shortcomings with conventional freezing techniques, it has been proposed to apply a magnetic field to the food during the freezing process. In this approach, according to U.S. Pat. No. 6,250,087, magnetic energy is applied to the food to be frozen in a conventional freezer to attempt to prevent cell fracture caused by ice crystal growth during the freezing process. The food is shaken by the application of the magnetic field to suppress crystallization. However, this approach uses conventional freezing technology and the process still takes a long time for complete freezing to take place (1 to 3 hours, depending on the temperature and product size). In general, conventional prior art food freezing methods have substantial drawbacks resulting from the substantial loss of moisture content, cell structure damage, thereby reducing freshness and changing the texture and desirability of the thawed food product.

There are several parallels in the process of frosting and defrosting food products, but in many aspects the defrosting is even more complicated than freezing. A high temperature difference between the product and the cooling medium can be an advantage during freezing, exemplified by the use of liquid nitrogen or carbonic acid in some applications. But excessive temperature differences should be avoided during defrosting. The degree of heat that flows into a product during defrosting should be just sufficient for the ice crystals to melt, without damaging the defrosted part when the isothermal melting line penetrates the products from outside and into the core. At the same time the process should be as fast as possible because otherwise enzymatic decomposition processes in the tissue are accelerated and the development of microorganisms encouraged. Today's defrosting technologies attempt to strike a balance between these contrasting requirements, but do not succeed entirely.

The least expensive, but also the least effective method is to defrost food products in the air. Because air has a low thermal conductivity the thawing rate is low. However, due to the long period of time spent in the air the product will lose moisture from the surface and dry out. Other thawing methods are based on the use of water for thawing. The spectrum of used methods ranges from simple immersion tanks to continuously operating sprinkler systems which thaw the frozen products with heated water. There are also new kinds of defrosting technologies undergoing tests such as climate systems where water or steam is sprayed finely into the thawing chamber through jets. US 4,898,741 proposes a method for thawing deep-frozen food products based on the products being situated in a humid atmosphere by an air flow with a rate of speed of approximately 5 m/sec. It is specified that the humidity is maintained by mixing injecting water and by airflow with a specific temperature. This method has undesirable side effects such as a rather unattractive change of color of the food products. Although inexpensive and effective, the mix of vapor and air reduces the humidity and cause dehydration and color changes. Because of these problems and a lack of an adequate freezing and thawing method for food products, these products are of lesser interest to the consumers. Hence they are sold at a lower price, making them less profitable for the producer.

DE 10 2006 046658 A1 relates to a method and a device for producing bakery products, whereby desorption of the dough is prevented. In order to do so, said bakery products are moistened in a cooled and ventilated environment that is filled with evenly distributed, fine aerosol droplets. Said aerosol moistens and partly penetrates the bakery products. Not only this results in an improved preservation of said bakery products, but also there is an improved temperature transfer through the bakery products' outer surface, such that backing time can be shortened. Additionally, upon baking, a thick and crispy crust is advantageously formed.

The present invention aims to resolve at least some of the problems mentioned above. The current invention discloses a method for thawing whereby the entered quality of the food products at the time of freezing are retained. The invention applies particularly for fresh food products which are based on fish and shellfish but to a large extent also on meat and particularly meat from poultry but also from cattle and game. With regards to the food products, the current invention particularly applies to food products with higher water content, and also applies to delicate vegetables like cucumbers and fruits such as berries.

### SUMMARY OF THE INVENTION

The present invention provides a method for thawing frozen food products. It provides a method and apparatus for thawing food products whereby the food product retains its original quality. After thawing, the previous freshly frozen food product will keep its original weight and still have equal sensorial parameters, such as color, consistency, texture, surface wetness, taste and flavor as when fresh. The current invention also omits the need of various branches of the food industry to handle cold stored, unfrozen food products, which is contributory to higher costs and prices. Moreover, by use of the current invention, one need not be concerned about transport distances, delays in the transport chain due to weather conditions or other uncontrollable external factors, as well as seasons. The current invention makes possible the presence of food products with fresh quality at any desired time and place.

For instance, whole fish and fish presentations do not normally have a smooth and even surface or shape, which by using the prior art defrosting technologies, some parts of the product might have different temperatures than the core of the product, again creating microorganism development concerns. The current invention delivers a consistent temperature throughout the product, which will help with maximizing yields and sustainability as fewer products will be sorted out and wasted from further processing, value adding and distribution.

In a first embodiment, said method comprises the step of placing the food products in a climate chamber with a controlled humid climate air flow and temperature, characterized in that the frozen food products are subjected to an aerosol comprising atomized water droplets. These atomized water droplets increase the speed of energy transformation between the product and the environment; prevent cellular damage of the product during both freezing and thawing, ensuring the fresh quality of the food product. The method prevents thus the formation of sharp ice crystals in the cellular compartments of the food product during freezing, which cause cellular damage. When food products are thawed by the current invention, evaporation of moisture from the cells, subsequent protein denaturation and drip loss is avoided.

Preferably, said climate chamber comprises a relative humidity range of 95 to 100%. The latter range ensures an overall hydration of the product, without the risk of becoming too moist and hence affecting texture of the food product. Dehydration, an effect which is seen in the currently known freezing and thawing processes is completely abolished. Thaw exudate is eliminated and the original fresh qualities at the time of freezing of the product are preserved.

Said aerosol is preferably generated by an atomizer and comprises a piezoelectric actuator, preferably with a frequency range between 1.7 and 2.5 MHz. According to the invention, said atomized water droplets have a particle size of 0.1 to 10 µm, more preferably 1 to 5 µm. The particle size has been optimized in order to create an optimal heat carrier during the freezing and thawing process. The particle size allows the aerosol to be cooled down to very low temperatures, without the formation of unwanted ice crystals which are detrimental to the cells of the food product. The use of atomized water droplets in the disclosed range of the current invention will hence cause negligible cellular damage of the food products during freezing and/or thawing. The products will keep their input condition. Moreover, the process of thawing will be considerably faster than the currently known thawing methods, without the loss of quality which is usually seen when using conventional processes. If the product is not frozen quickly enough, or if stored under fluctuating temperatures or improperly thawed, sharp ice crystals form and penetrate the cell walls and membranes causing cell and tissue fluids to escape during thawing. This is called drip loss. When the food product is for instance fish, it can account for 3 to 5% of net fish mass and represents a considerable economic loss. Although fast thawing helps maintain the natural properties of the fish, the tissues have less time to reabsorb the drip loss. Reabsorption of cell and tissue fluid is a slow process which takes several hours. Simply slowing down the defrosting time does not offer an alternative because this normally leads to increased microorganism activities and surface dehydration causing damages in flavor, color and texture. During the thawing process heat has to flow through the already thawed outer body layers into the center which is still frozen. The outer layers of the food product quickly reach temperatures at which bacteria can flourish and enzymes are active. Excessive or poorly controlled defrosting can cause the activity of enzymatic and chemical spoilage processes increase. The tissues go soft and limp. The surface dries out and the product's natural color, aroma and flavor properties are degraded.

Preferably, the optimal temperature, humidity and thawing time is determined based on the nature and characteristics of said food product. In a more preferred embodiment, the temperature of the climate chamber is correlated to the core temperature of said food product. By optimizing the latter for each product, near perfect conditions are created in order to optimally preserve the fresh input condition of the food products. Optimization will further ensure faster freezing and thawing processes, especially when compared to the currently known processes. More preferably, the temperature will be gradually decreased during said thawing of food products. The latter will ensure that the fresh quality of the food products is preserved during the thawing process, as well as further prevent any cellular damage which might occur during the process.

In another embodiment, additives can be added to the aerosol. As such, additional characteristics, such as flavors, colors, etc. can be easily added to the food products, without the need of a subsequent and often complicated processing step, hence gaining time and money.

In a second aspect, said food product when thawed by the current method has maintained the before freezing input quality.

The latter will increase its market value, as well as the potential applications in the food industry. Food that has been frozen is usually, due to loss of quality, seen as inferior to fresh and is preferably used for further processing. By use of the thawing processes of the current invention, the freshly thawed food will keep its input condition and qualities. Hence, the products resulting from the current invention will meet the high standards of food products to be used in restaurants and the fresh fish markets and have a wider application range.

Said food product when thawed according to the current invention shows a drip loss of 0% (w/w) and due to hydration can even show an increase in the product weight in some products like seafood caused by hydration. Drip loss does not only cause weight loss, it also reduces product quality. The milky liquid that drips off the product contains numerous soluble nutrients, especially proteins that are lost and hence reduce the final product's taste and nutritional value. A high degree of drip loss is generally linked to an overall loss in quality, look and texture of the food product. According to the invention, said food product comprises fish, fruit, vegetables or meat. These products often show a considerable loss in quality when frozen and thawed by prior art methods. The latter is avoided when employing the method of the current invention.

### DETAILED DESCRIPTION OF THE INVENTION

The object of the present invention concerns a method for thawing food products chosen from the group of fish, meat, vegetables or fruit, whereby the food product after thawing has not lost its inherent entered fresh qualities. No perceivable qualitative impairment is seen after thawing the food product. The method furthermore allows elimination of restrictions and bottle necks usually seen with harvesting, handling, transporting and vending food products. Normal limitations such as distance, seasons and unforeseen events causing deterioration of the food quality are eliminated, when utilizing the method according to the current invention.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specify the presence of what follows e.g. component and do not exclude or preclude the presence of additional, non-recited components, features, element, members, steps, known in the art or disclosed therein.

"Food products", as used throughout this document, more specifically relates to food products chosen from the group of fish, meat, fruit, and vegetables.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

In a first aspect, the invention provides for a method for thawing frozen food products. In an embodiment, the method comprises placing the food products in a climate chamber with a controlled humid climate air flow and temperature, characterized in that the frozen food products are subjected to an aerosol comprising atomized water droplets.

As used herein, the term 'aerosol' is to be understood as a gaseous suspension of fine solid or liquid particles or droplets. In a preferred embodiment, said aerosol is a gaseous suspension of liquid particles or droplets. The term 'atomized' droplets is to be understood as particles or droplets of the aerosol which have a diameter smaller than 100 µm.

The relative humidity range in the climate chamber will be highly dependent on the nature of the food product to be frozen or thawed, but preferably, the climate chamber will comprise a relative humidity range of 90 to 100%, more preferably between 95% and 99%. In spite of this extreme humidity, the created aerosol or mist will feel dry and can be best described as 'dry water'.

According to the invention, the atomized water droplets will have a preferred particle size range between 0.1 and 10 µm. In a more preferred embodiment, said particle size ranges from 1 to 5 µm. The term particle size is to be understood as the diameter of the generated particles or droplets of the aerosol, in the ideal situation where said particles or droplets are spherical. Devices which generate atomized water droplets of a defined particle size are readily known in prior art. The relative humidity in the climate chamber reaches very high values in order to achieve equilibrium between the water-activity of the specific food product and the ambient air-humidity. The particle size, combined with the preferred relative humidity range of the generated aerosol ensures optimal heat and temperature carrier characteristics of the aerosol.

The process according to the current invention has been extremely beneficial in terms of preserving the quality of frozen food products during a thawing process. Normally during the latter, a dehydration process will take place, obviously negatively affecting the quality of the food. In general, due to the dehydration process in the cells of the food product an increase in salt concentration and thereof related protein denaturation is seen. As moisture evaporates from the cells during the thawing process, more moisture is drawn to the surface, hereby accumulating salts. The latter results in an increase in the ionic strength and a change in pH which adversely affects the protein stability in the cells. Maximum denaturation of water soluble protein occurs when the moisture content of the tissue is reduced to a value below 20 to 30%.

The use of the relative humidity range of the current invention, combined with the specific aerosol droplet environment during the thawing process allows reabsorption of cell and tissue fluids thus protecting against this osmosis process. Thaw exudate is eliminated and the original entered fresh qualities of the product are preserved. This differs from all previous thawing methods, which all lead inevitably to a certain degree of dehydration.

In a preferred embodiment, said aerosol is generated by an atomizer or nebulizer. Said atomizer is preferably an ultrasonic atomizer or nebulizer. More preferably, said atomizer comprises a piezoelectric actuator, preferably with a frequency range between 1.7 and 2.5 MHz. In detail, sound waves are produced by permanent changes in pressure, whereby the electrical energy is transformed into mechanical energy by the piezoelectric actuator. The latter ensures the generation of the aerosol with the preferred range of particle size of the atomized water particles.

In a preferred embodiment, the optimal temperature, humidity and freezing or thawing time will be determined based on the nature and characteristics of said food product. As defined by the current invention, the nature and characteristics of the food product is to be regarded as the sort of food product (e.g. fish, meat, fruit, vegetable,...) and its inherent features and physical appearances, as there is for instance fatty acid content, water content, sugar content, thickness, weight, dimension, etc. For instance, the thickness of the product is a parameter which has to be taken into account when setting up the thawing protocol. Other inherent characteristics of the food, such as water, sugars and fatty acid content, are equally of importance. In a more preferred embodiment of the current method, protocols comprising the preferred temperature/humidity and time tables are provided separately for each food product which can be thawed by the current method (see also examples).

In general, one can say that the fresh products should be frozen as soon as possible after harvesting or obtaining. For instance, for fish, this should be before, or at the latest at the time when the fish comes out of rigor mortis. For fruit, this will be right after harvesting.

The core temperature of the frozen food products should be between -10°C and - 60°C, more preferably between -18°C and -60°C, preferably between -15°C and - 25°C, more preferably -18°C. The latter will strongly depend on the desired application of the food products and the nature and the characteristics thereof. For instance, the frozen temperature should be lowered the longer the storage time and the higher fat content of the product. For example can fatty tuna keep its fresh sushi quality more than a year if it is kept in a frozen storage at -40/-60°C.

Humidity in the climate chamber preferably ranges from 90 to 100%, more preferably from 95% to 99%.

Preferably, the temperature in the climate chamber will be correlated to the core temperature of said food product and its desired final core temperature when being thawed or frozen. Generally, during the thawing process, the temperature is gradually decreased during said thawing of food products. More preferably, the temperature in the climate chamber will be slowly decreased with an increase in core temperature of the frozen product.

When products are being frozen the temperature will be kept at its lowest, in order to freeze the product as fast as possible, preferably down to a core temperature between -15°C and -20°C or lower. The choice of core temperature will depend on the nature of the food product and the prospected storage time. For instance, the core temperature should be lower than -30-40°C for fat fish which has to be stored over a long period of time. This knowledge about temperature optimization related to fatness and storage time are well known.

Thus, in a preferred embodiment, the temperature of the climate chamber is correlated to the core temperature of said food product.

In one embodiment, a temperature sensor is provided, connected to the inside of the food product to monitor the core temperature of food products. In another embodiment, temperature sensors are equally provided to the climate chamber measure the temperature of the chamber. These temperature sensors are preferably connected to a control unit so that the interior and the core food temperatures can be monitored and controlled. In another embodiment, the process may be standardized by practicing tested models without measuring each processed product or production batch.

A general thawing cycle of the current invention may be the following:
- climate chamber temperature between +15 and +30°C until the core temperature of the food products are -10°C
- climate chamber temperature between +10 and +15°C until the core temperature of the food products are -5°C
- climate chamber temperature between +5 and +10°C until the core temperature is -1°C

Preferably, said chamber temperatures should not be higher than +30°C because of the effect on vitamins, phospholipids and other temperature sensitive components. It is preferred that the thawing process should be as fast as possible to prevent the upstart of microorganism processes.

By using the thawing method according to the current invention (irrespective of the used freezing method) the entered quality of the food product when frozen will be guaranteed and ensured, as well as a shorter thawing process, compared to the prior art methods for thawing food products. Generally, the thawing time is reduced by 20 to 50% and more.

In a further step of the method, the food product can be provided with additional characteristics when being thawed according to the current method. The latter is achieved through addition of additives to the aerosol. Additives can for instance comprise extra flavour compounds, colouring compounds, marinades etc. which can be transferred to the products through the aerosol droplets, hence giving the food product an extra characteristic.

The food product thawed by the current method has kept up the input quality before freezing.

The wording 'input quality' is to be defined as the sum of the sensorial parameters of a food product such as colour, consistency, texture, surface wetness, water content taste, flavour and appearance. Preferably, the input quality (prior to freezing) of the food product will equal the output quality (quality right after thawing) if product-specific optimal storage conditions regarding stable low temperatures are applied. There will be no perceivable loss of quality between these two stages (under the strict condition that the optimal storage requirements are met) contrary to conventional freezing and thawing methods. Preferably, said the condition of the thawed food product is determined by a check list comprising at least three of the following sensorial parameters: colour, consistency, texture, surface wetness, water content, taste, flavour and appearance. The thawed product is to be determined as having the same input condition when at least two of the sensorial parameters on the check list are being equal to the ones of the product in input condition. Parameters can be checked visually, or with the appropriate measuring devices.

As defined herein, drip loss is to be understood as the loss in weight of food products owing to extruding and dripping away of tissue juices. Said amount of drip loss is determined by measuring the weight difference between the food product in frozen status and the thawed food product. In a most preferred embodiment, said food product thawed by the current method, shows drip loss between 0 to 10% (w/w). In a more preferred embodiment, said drip loss is less than 5% (w/w), more preferably less than 1% and even more preferably less than 0.5% (w/w). In a most preferred embodiment, said drip loss is 0% (w/w) (not measurable). In a most preferred embodiment, the weight of said thawed food product (compared to its frozen weight) is increased by 0 and 10% (w/w), more preferably between 0 and 5% (w/w) due to water uptake.

In the preferred embodiment, the food product will comprise fish. Said fish is to be understood as an aquatic animal, vertebrate or invertebrate which is edible or derivatives of said aquatic animal. The latter can for instance include saltwater or freshwater members of the superclass of Pisces, shellfish, crustacean, jellyfish or squid. In a more preferred embodiment, said fish has been frozen prior to rigor mortis or just after when the fish comes out of rigor mortis. In a most preferred embodiment, said fish thawed by the current method, is characterized in that the fish has kept the input condition. More preferably, said fish when being thawed shows a drip loss of 0 to 10% (w/w). In a more preferred embodiment, said drip loss of the thawed fish is less than 5% (w/w), more preferably less than 1% and even more preferably less than 0.5% (w/w). In a most preferred embodiment, said drip loss of the thawed fish is 0% (w/w) (not measurable). In a most preferred embodiment, the weight of said thawed fish (compared to its frozen weight) is increased by 0 and 10% (w/w), more preferably between 0 and 5% (w/w) due to water uptake.

In another preferred embodiment, said food product is fruit or vegetables. The latter, especially fruit, typically loses a certain amount of juice when being thawed by conventional methods. Commercial exploitation of such frozen and thawed fruits and vegetables poses a number of problems as the quality is generally seen as inferior. The inventors haves found a way of increasing a product shelf life which consists of freezing and thawing the fruit, either whole or prepared, such that when thawed no functional damage occurs to the cellular membranes, in particular the plasmalemma and vacuolar membranes. On thawing by the current invention cell integrity is retained, as well as the overall quality (visual aspects, consistency, turgor,...) of the fruit and vegetables.

In a preferred embodiment, said fruit when thawed according to the current method, shows a drip loss of 0 to 10% (w/w). In a more preferred embodiment, said drip loss of the thawed fruit comprises less than 5% (w/w), more preferably less than 1% and even more preferably less than 0.5% (w/w). In a most preferred embodiment, said drip loss of the thawed fruit is 0% (w/w) (not measurable).

In another preferred embodiment, said fruit thawed according to the current method does not demonstrate a loss of turgor (bite) when compared to its condition prior to freezing.

There is also disclosed a climate chamber for thawing food products, comprising at least one section for receiving food products, means for sensing the temperature in said climate chamber, a protocol menu allowing an operator to choose the desired protocol based on the nature of said food product and an atomizer for providing an aerosol, characterized in that said atomizer generates an aerosol comprising a particle size between 0.1 and 10 µm. Said protocol menu is to be understood as an option menu, preferably with digital display, which allows the operator to indicate which food product is to be thawed and/or which protocol or settings are to be used.

Preferably, said atomizer is an ultrasonic atomizer. Due to their physical nature, sound waves consist of mechanical vibrations of compressible media. These vibrations occur due to a displacement of equilibrium of the particles of a compressible material. Due to their own mobility and gravitation these particles are periodically moving to and from their original position. Sound waves are tied to a medium and cannot exist in a vacuum.

Preferably, the generated electrical energy will be transformed into mechanical energy by a piezoelectric transducer. More preferably, said piezoelectric transducer has a frequency range between 1.7 and 2.5 MHz. The average droplet diameter depends on the surface tension and the density of the medium as well as on the excitation frequency. The higher the excitation frequency, the smaller the average droplet diameter. In a preferred embodiment, said piezoelectric transducer is installed to the bottom of a water reservoir within the climate chamber. Constant compression /decompression of the water column above the transformer causes cavitation in the immediate vicinity of the water surface. Crossed capillary waves are formed, from which very small mist droplets (aerosols) are cast off in the wave crest. The latter will subsequently be discharged by airflow in the chamber, which results in a fast dilution with the ambient air. Preferably, the humid air is circulated by fans. Heating means are present in order to distribute hot or cold humid air. In a most preferred embodiment, humidity of this flow is controlled by a humidistat.

In a preferred embodiment, said climate chamber is a stationary system. In another preferred embodiment, said climate chamber is a continuous system. Preferably, the temperature in said climate chamber will range from -60°C to +40°C, depending on the application (thawing or freezing) and the characteristics of the food products to be processed. In an embodiment, said climate chamber is part of a larger system or unit, comprising automatic delivery means of the frozen food products (such as a conveyor) which enter the climate chamber, and which, upon thawing, are transported further to for instance a packaging or distribution unit. The latter ensures an automated system for thawing and distributing frozen food products.

Preferably, the water used in the atomization process is purified and re-used. In a more preferred embodiment, said purification occurs by use of a reverse osmosis process performed by reverse osmosis devices. The latter ensures that the ultrasonic ceramic membranes are well-maintained, eliminate salts and impurities from the used water and prevent contamination of the food products. Furthermore, these savings in energy and water consumption contribute significantly to the need of reducing the carbon footprint of the food processing industry.

The invention is further described by the following non-limiting examples which further illustrate the invention, and are not intended to, nor should they be interpreted to, limit the scope of the invention.

### EXAMPLES

The temperature/humidity/time combinations differ depending upon the nature of the product to be thawed and the thickness of the piece to be thawed. Fish fillets, thinly sliced sushi, or prawns, for example, require less time than whole fish. Furthermore, the thawing times for whole salmon, cod or hake were different for each species, as are the thawing times for a 2kg fish and an 8 kilo fish. The optimal temperature/humidity/time combinations must therefore be determined by actual experiments on the items to be frozen and thawed.

### Example 1

Salmon fillets with a core temperature of minimum -18°C were thawed in a climate chamber at +15°C and 92% humidity by slowly decreasing the temperature to +7°C when the core temperature in the fillets reached -1°C after 83 minutes. Aerosol was generated by an ultrasonic atomizer of 2.1 Hz, and had a droplet size of 6 µm.

### Example 2

Whole cod fishes with a core temperature of minimum -18°C were thawed in a climate chamber at +30°Cwith 92-95% humidity. When the core temperature in the fish was -10C the temperature in the chamber was lowered to +15°C and further to +5°C when the core temperature reached -4°C after 186 minutes. Aerosol was generated by an ultrasonic atomizer of 1.8 Hz, and had a droplet size of 3 to 5 µm.

### Example 3

Raspberries with a core temperature of minimum -18°C were thawed in a climate chamber at +12°C with 96% humidity by slowly decreasing the temperature to +4°C when the core temperature in the raspberries reached -1°C after 35 minutes. Aerosol was generated by an ultrasonic atomizer of 1.7 Hz, and had a droplet size of 1 µm.

### Example 4

Strawberries with a core temperature of minimum -18°C were thawed in a climate chamber at +14°C with 95% humidity by slowly decreasing the temperature to +5°C when the core temperature in the raspberries reached -1°C after 25 minutes. Aerosol was generated by an ultrasonic atomizer of 1.8 Hz, and had a droplet size of 2 µm.

## Claims

1. A method for thawing frozen food products, said food products being chosen from the group of fish, meat, fruit, and vegetables, said method comprising placing the food products in a climate chamber with a controlled humid climate, air flow and temperature, **characterized in that** the frozen food products are subjected to an aerosol comprising atomized water droplets having a particle size of 0.1 to 10 µm.

2. Method according to claim 1, whereby said climate chamber comprises a relative humidity range of 90 to 100%.

3. Method according to any one of the previous claims 1 or 2, **characterized in that** said aerosol is generated by an atomizer.

4. Method according to claim 3, whereby said atomizer comprises a piezoelectric actuator, preferably with a frequency range between 1.7 and 2.5 MHz

5. Method according to any one of the claims 1 to 4, whereby said atomized water droplets have a particle size of 1 to 5 µm.

6. Method according to any one of the claims 1 to 5, whereby the thawing temperature, humidity and thawing time is determined based on the nature and characteristics of said food product.

7. Method according to any one of the claims 1 to 6, whereby the temperature of the climate chamber is correlated to the core temperature of said food product.

8. Method according to claim 7, whereby the temperature is gradually decreased during said thawing of said food products.

9. Method according to any one of the claims 1 to 8, whereby additives are added to said aerosol.

## Patentansprüche

1. Ein Verfahren zum Auftauen von gefrorenen Nahrungsmittelprodukten, wobei die Nahrungsmittelprodukte aus der Gruppe von Fisch, Fleisch, Obst und Gemüsen ausgewählt werden, das Verfahren umfassend das Anordnen der Nahrungsmittelprodukte in einer Klimakammer mit einem kontrollierten feuchten Klima, Luftstrom und Temperatur, **dadurch gekennzeichnet, dass** die gefrorenen Nahrungsmittelprodukte einem Aerosol unterzogen werden, das zerstäubte Wassertröpfchen mit einer Teilchengröße von 0,1 bis 10 µm umfasst.

2. Verfahren nach Anspruch 1, wobei die Klimakammer einen relativen Feuchtigkeitsbereich von 90 bis 100% umfasst.

3. Verfahren nach einem der vorhergehenden Ansprüche 1 oder 2, **dadurch gekennzeichnet, dass** das Aerosol durch einen Zerstäuber erzeugt wird.

4. Verfahren nach Anspruch 3, wobei der Zerstäuber einen piezoelektrischen Aktor umfasst, vorzugsweise mit einem Frequenzbereich zwischen 1,7 und 2,5 MHz.

5. Verfahren nach einem der Ansprüche 1 bis 4, wobei die zerstäubten Wassertröpfchen eine Teilchengröße von 1 bis 5 µm aufweisen.

6. Verfahren nach einem der Ansprüche 1 bis 5, wobei die Auftautemperatur, die Feuchtigkeit und die Auftauzeit basierend auf der Art und den Eigenschaften des Nahrungsmittelprodukts bestimmt ist.

7. Verfahren nach einem der Ansprüche 1 bis 6, wobei die Temperatur der Klimakammer mit der Kerntemperatur des Lebensmittelprodukts korreliert ist.

8. Verfahren nach Anspruch 7, wobei die Temperatur während des Auftauens der Nahrungsmittelprodukte allmählich verringert wird.

9. Verfahren nach einem der Ansprüche 1 bis 8, wobei dem Aerosol Zusatzstoffe zugesetzt werden.

## Revendications

1. Un procédé de décongélation de produits alimentaires congelés, lesdits produits alimentaires étant choisis parmi le groupe des poissons, viandes, fruits, et légumes, ledit procédé comprenant le placement des produits alimentaires dans une chambre climatique à climat humide, flux d'air et température contrôlé(e), **caractérisé en ce que** les produits alimentaires congelés sont soumis à un aérosol comprenant des gouttelettes d'eau atomisées ayant une taille de particule de 0,1 à 10 µm.

2. Procédé selon la revendication 1, dans lequel ladite chambre climatique comprend une plage d'humidité relative de 90 à 100%.

3. Procédé selon l'une quelconque des revendications précédentes 1 ou 2, **caractérisé en ce que** ledit aérosol est généré par un atomiseur.

4. Procédé selon la revendication 3, dans lequel ledit atomiseur comprend un actionneur piézoélectrique, de préférence avec une gamme de fréquence entre 1,7 et 2,5 MHz.

5. Procédé selon l'une quelconque des revendications 1 à 4, dans lequel lesdites gouttelettes d'eau atomisées ont une taille de particules de 1 à 5 µm.

6. Procédé selon l'une quelconque des revendications 1 à 5, dans lequel la température de décongélation, l'humidité et le temps de décongélation sont déterminés sur la base de la nature et les caractéristiques dudit produit alimentaire.

7. Procédé selon l'une quelconque des revendications 1 à 6, dans lequel la température de la chambre climatique est corrélée à la température interne dudit produit alimentaire.

8. Procédé selon la revendication 7, dans lequel la température est progressivement diminuée lors de ladite décongélation desdits produits alimentaires.

9. Procédé selon l'une quelconque des revendications 1 à 8, dans lequel des additifs sont ajoutés audit aérosol.
